# EUROPÄISCHE PATENTSCHRIFT

(11) **EP 3 938 257 B1**
(45) Veröffentlichungstag und Bekanntmachung des Hinweises auf die Patenterteilung: **25.01.2023**
(21) Anmeldenummer: 20712855.4
(22) Anmeldetag: 04.03.2020
(51) Int. Cl.: B60T 13/66

(54) **ELEKTRONISCH STEUERBARES BREMSSYSTEM MIT ZWEI RÜCKFALLEBENEN**
ELECTRONIC CONTROLLABLE BRAKE SYSTEM WITH TWO FALLBACK LEVELS
SYSTÈME DE FREINAGE À CONTRÔLE ÉLECTRIQUE AVEC DEUX NIVEAUX DE REPLI

(30) Priorität: 12.03.2019 DE 102019106274
(43) Veröffentlichungstag der Anmeldung: 19.01.2022
(73) Patentinhaber: ZF CV Systems Europe BV, 1170 Brussels (BE)
(72) Erfinder: MICHAELSEN, Arne, 30926 Seelze (DE); OTREMBA, Robert, 30952 Ronnenberg (DE); VAN THIEL, Julian, 30938 Grossburgwedel (DE)
(74) Vertreter: Rabe, Dirk-Heinrich
(86) Internationale Anmeldenummer: PCT/EP2020/055699
(87) Internationale Veröffentlichungsnummer: WO 2020/182575

(56) Entgegenhaltungen:
- DE-A1-102014 006 615
- DE-A1-102017 002 718
- DE-A1-102017 002 719
- DE-A1-102017 005 979
- DE-A1-102017 006 356

## Beschreibung

Die Erfindung betrifft ein elektronisch steuerbares Bremssystem, insbesondere elektronisch steuerbares pneumatisches Bremssystem, für ein Fahrzeug, insbesondere Nutzfahrzeug, mindestens aufweisend ein Betriebsbremssystem mit einem Vorderachsbremskreis mit einem Vorderachsmodulator und daran angeschlossenen Vorderachsbremsen, einem Hinterachsbremskreis mit Hinterachsbremsen, und einem mit einem Fahrzeug-BUS verbundenen zentralen Steuermodul, wobei den Vorderachsbremsen ein Vorderachs-Betriebsbremsdruck und den Hinterachsbremsen ein Hinterachs-Betriebsbremsdruck zuführbar ist und das zentrale Steuermodul ausgebildet ist, in Abhängigkeit einer Bremsvorgabe ein Betriebsbrems-Steuersignal zu erzeugen, wobei der Vorderachs- und Hinterachs-Betriebsbremsdruck in Abhängigkeit des Betriebsbrems-Steuersignals erzeugt und an die Vorderachs- und Hinterachsbremsen vorgegeben werden kann zum von dem zentralen Steuermodul elektrisch gesteuerten Umsetzen der Bremsvorgabe über den Vorderachsbremskreis und den Hinterachsbremskreis. Das elektronisch steuerbare Bremssystem weist ferner einen Feststellbremskreis mit einem Feststellbremsmodul auf, das dazu ausgebildet ist, für den Fall eines Defekts in dem zentralen Steuermodul, die Bremsvorgabe zu verarbeiten und wenigsten in Abhängigkeit der Bremsvorgabe einen Hinterachs-Redundanzbremsdruck an Federspeicherteilen auszusteuern zum redundanten Umsetzen der Bremsvorgabe. Der Vorderachsmodulator ist dabei mit dem zentralen Steuermodul zum Empfangen des Betriebsbrems-Steuersignals und zum Aussteuern des Vorderachs-Betriebsbremsdrucks in Abhängigkeit des Betriebsbrems-Steuersignals an den Vorderachsbremsen verbunden.

Ein Bremssystem in einem Fahrzeug, vorzugsweise Nutzfahrzeug, kann mit zwei oder mehr Betriebsbremskreisen, in denen ein an Betriebsbremsen ausgesteuerte Betriebsbrems-Bremsdruck eingestellt wird sowie einem Parkbremskreis, in dem ein an Federspeicherbremsen oder Federspeicherteilen von kombinierten sogenannten Tristop-Bremszylindern, ausgesteuerter Parkbrems-Bremsdruck eingestellt wird, ausgestattet sein. Die Aussteuerung des Betriebsbrems-Bremsdrucks, also insbesondere eines Vorderachs- und Hinterachs-Betriebsbremsdrucks an den entsprechenden Bremsen erfolgt beispielsweise über einen Druckmodulator, der gemäß einer Betriebsbrems-Bremsvorgabe in Form eines pneumatischen Betriebsbrems-Steuerdrucks oder eines elektrischen Betriebsbrems-Steuersignals einen Betriebsbrems-Bremsdruck an den jeweiligen Betriebsbremsen ausgibt.

Im normalen Betrieb erfolgt die Vorgabe an den Druckmodulator elektrisch über das Betriebsbrems-Steuersignal, wobei das Betriebsbrems-Steuersignal von einem Betriebsbrems-Steuermodul, insbesondere einem zentralen Modul, und/oder in Abhängigkeit einer von einem Assistenzsystem automatisiert angeforderten Assistenz-Bremsvorgabe ermittelt und ausgegeben wird. Ein solches Assistenzsystem kann insbesondere eine Einheit für autonomes Fahren oder dergleichen sein. Im Redundanzfall, zum Beispiel bei einem elektrischen Ausfall des zentralen Moduls, erfolgt die Vorgabe an den Druckmodulator bei bekannten Bremssystemen häufig über den Betriebsbrems-Steuerdruck, der dem Druckmodulator über einen pneumatischen Redundanzanschluss vorgegeben wird und der beispielsweise von einer als elektropneumatisches Betriebsbrems-Ventil ausgeführten Betriebsbrems-Betätigungsvorrichtung mit einem Bremspedal in Abhängigkeit der Betriebsbrems-Bremsvorgabe ausgegeben wird.

Der Feststellbremskreis dient vorrangig dazu, das Fahrzeug in einer Parksituation abzustellen oder eine Hilfsbremsung oder Notbremsung während der Fahrt durchzuführen, indem gesteuert von einem Feststellbremsmodul ein Feststellbremsdruck ausgesteuert wird, in Abhängigkeit dessen, die Federspeicherbremsen oder Federspeicherteile der kombinierten Bremszylinder, zugespannt werden, wobei zum Zuspannen der Feststellbremsdruck reduziert wird. Beispielhaft ist ein derartiges Feststellbremsmodul in DE 10 2015 008 377 A1 beschrieben. Herkömmlicherweise arbeiten der Feststellbremskreis und die Betriebsbremskreise getrennt voneinander und werden aus getrennten Druckluftvorräten versorgt. In bestimmten Anwendungen ist es möglich, den oben geschilderten Redundanzmechanismus der Betriebsbremse durch die alternative Ansteuerung des Feststellbremskreises zu ersetzen. Dazu muss die elektrische Spannungsversorgung der Feststellbremse üblicherweise unabhängig von der Spannungsversorgung der Betriebsbremse erfolgen.

Bei einem Ausfall der elektrischen Ansteuerung der Betriebsbremskreise über das zentrale Modul kann, wie beschrieben, eine pneumatische, durch den Fahrer gesteuerte erste Rückfallebene ausgebildet werden. Steht der Fahrer allerdings nicht als Rückfallebene zur Verfügung, da er zum Beispiel unaufmerksam oder, im Falle von höher automatisierten Fahrmanövern, nicht am Platz ist, kann eine zweite Rückfallebene ausgebildet werden, die automatisiert und elektronisch gesteuert eingreifen kann, wobei dazu der vorhandene Feststellbremskreis verwendet wird. Die automatisierte Bremsanforderung wird nach Erkennen des elektrischen Ausfalls in einem der Betriebsbremskreise dem Feststellbremsmodul zugeführt, das durch eine Vorgabe des Feststellbremsdrucks entsprechend die Federspeicherbremsen oder Federspeicherteile der kombinierten Bremszylinder betätigen kann, um den elektrischen Ausfall der Betriebsbremsen zu kompensieren. Alternativ kann die automatisierte Bremsanforderung dem Feststellbremsmodul permanent zugeführt werden und bei Erkennen eines Ausfalls in mindestens einem der Betriebsbremskreise durch das Feststellbremsmodul kann das Feststellbremsmodul dann dazu vorgesehen sein, die Vorgabe des Feststellbremsdrucks entsprechend umzusetzen. In diesem Fall ist jedoch unter Umständen lediglich eine Fahrzeugachse, an der die Federspeicherbremsen im Feststellbremskreis angeordnet sind, abgebremst. Insofern wird dann nur ein Hinterachs-Redundanzbremsdruck an Federspeicherteilen ausgesteuert und die Hinterachse redundant eingebremst. Dies kann zu einer eingeschränkten Verzögerungsleistung und gegebenenfalls Instabilitäten währen der Fahrt führen.

Um dies zu vermeiden, ist in EP 2 090 481 B1 ein elektronisch steuerbares Bremssystem beschrieben, in dem ein Hinterachs-Betriebsbremskreis von einem Hinterachs-Betriebsbrems-Steuermodul gesteuert wird und ein Vorderachs-Betriebsbremskreis von einem Vorderachs-Betriebsbrems-Steuermodul. Im Vorderachs-Betriebsbrems-Steuermodul ist das Feststellbremsmodul für den Feststellbremskreis integriert, wobei der Feststellbremskreis Federspeicherbremsen an der Hinterachse steuert. Das Hinterachs-Betriebsbrems-Steuermodul sowie die Komponenten des Hinterachs-Betriebsbremskreises werden von einer ersten Energiequelle und das Vorderachs-Betriebsbrems-Steuermodul sowie das Feststellbremsmodul mit den entsprechend zugeordneten Komponenten werden von einer zweiten Energiequelle mit Energie versorgt.

Bei einem Ausfall der ersten Energiequelle, d.h. dem Hinterachs-Betriebsbremskreis mit den Betriebsbremsen an der Hinterachse, kann die Vorderachse weiter über den Vorderachs-Betriebsbremskreis und die Hinterachse über den Feststellbremskreis gebremst werden, so dass weiterhin beide Fahrzeugachsen abgebremst werden können. Der Feststellbremskreis kompensiert somit den Ausfall des Hinterachs-Betriebsbremskreises, indem an der Hinterachse statt mit den Betriebsbremsen mit den Federspeicherbremsen gebremst wird. Bei einem Ausfall der zweiten Energiequelle, d.h. sowohl des Feststellbremskreises an der Hinterachse als auch des Vorderachs-Betriebsbremskreises, wird von dem Hinterachs-Betriebsbrems-Steuermodul ein Betriebsbrems-Steuersignal ausgegeben, das - wie im normalen Betrieb - an den Hinterachs-Druckmodulator aber zusätzlich auch an ein Anhängersteuerventil des Fahrzeuges übertragen wird. Von dem Anhängersteuerventil wird ein entsprechender Steuerdruck erzeugt, der - falls vorhanden - auf den Anhänger übertragen wird, um dort eine Bremsung zu bewirken, und gleichzeitig auch über eine Redundanz-Druckleitung zum pneumatischen Redundanzanschluss am Vorderachs-Druckmodulator. Die Hinterachse und die Vorderachse werden somit - wie im normalen Betrieb - über die Betriebsbremsen abgebremst, wobei die Vorderachse ebenfalls durch das Hinterachs-Betriebsbrems-Steuermodul gesteuert wird.

Das Feststellbremsmodul kann weiterhin einen Parkbrems-Steuerdruck an das Anhängersteuerventil ausgeben, das diesen invertiert und an die Betriebsbremsen des Anhängers weiterleitet, um auch im Anhänger eine Parkbremsfunktion umsetzen zu können.

Somit ist im Stand der Technik vorgeschlagen, jeden Betriebsbremskreis über separate Steuermodule anzusteuern und einen Ausfall einer Energiequelle und somit zumindest eines Betriebsbremskreises dadurch zu kompensieren, dass der oder die jeweils noch funktionierenden Bremskreise eine Bremsung an der ausgefallenen Fahrzeugachse übernehmen, so dass auch im Redundanzfall noch beide Fahrzeugachsen für eine Bremsung herangezogen werden können.

Nachteilig hierbei ist, dass in elektronisch gesteuerten Bremssystemen, die über lediglich ein zentrales Betriebsbrems-Steuermodul die Betriebsbremsen an der Hinterachse und der Vorderachse und ggf. weiteren Fahrzeugachsen über den Druckmodulator ansteuern, keine derartige Kompensation stattfinden kann, da bei einem Ausfall der Energiequelle oder einzelner elektrischer Komponenten des jeweiligen Betriebsbremskreises das zentrale Betriebsbrems-Steuermodul nicht mehr die elektrische Ansteuerung der Betriebsbremsen bzw. der vorgeschalteten Druckmodulatoren an einzelnen Fahrzeugachsen übernehmen kann. Somit kann - falls in dem entsprechenden Bremssystem vorhanden - lediglich auf die pneumatische, vom Fahrer gesteuerte erste Rückfallebene ausgewichen werden, falls der Fahrer auch tatsächlich manuell eingreift. Eine rein elektronische Bremsvorgabe wie sie in EP 2 090 481 B1 beschrieben ist bzw. eine mögliche automatisiert vorgegeben Assistenz-Bremsvorgabe kann jedoch nicht mehr umgesetzt werden.

Weiterhin ist aus DE 10 2015 011 296 A1 ein elektronisch steuerbares pneumatisches Bremssystem bekannt, welches aufweist: mindestens einen Bremskreis, wobei in dem mindestens einen Bremskreis unabhängig voneinander Bremsdrücke an Betriebsbremsen einstellbar sind, wobei dem mindestens einen Bremskreis dazu mindestens ein Steuerventil zugeordnet ist. Das mindestens eine Steuerventil hat einen elektronischen Steuereingang zum Aufnehmen eines elektrischen Steuersignals und einen pneumatischen Steuereingang zum Aufnehmen eines Steuerdrucks. Das mindestens eine Steuerventil versorgt in Abhängigkeit des Steuersignals oder des Steuerdrucks über Arbeitsanschlüsse die Betriebsbremsen des mindestens einen Bremskreises mit Bremsdruck. Eine erste Steuereinheit ist vorgesehen zum Ausgeben der Steuersignale in Abhängigkeit einer Fahrzeugsollverzögerung zum elektrischen Ansteuern des mindestens einen Steuerventils, wobei die Fahrzeugsollverzögerung von einem ersten Bremsventil vorgegeben werden kann. Das erste Bremsventil gibt einen ersten Bremsventilsteuerdruck an den mindestens einen Bremskreis vor. Ferner hat das Bremssystem ein zweites Bremsventil zum Ausgeben eines zweiten Bremsventil-Steuerdrucks, das derartig im pneumatischen Bremssystem angeordnet ist, dass der erste Bremsventil-Steuerdruck des ersten Bremsventils und/oder der zweite Bremsventil-Steuerdruck des zweiten Bremsventils als Steuerdruck an das mindestens eine Steuerventil ausgegeben wird zum pneumatischen Ansteuern des mindestens einen Steuerventils, wobei das zweite Bremsventil elektronisch ansteuerbar ist, wenn eine elektrische Ansteuerung des mindestens einen Steuerventils verhindert ist zum Ausbilden einer elektronisch pneumatisch gesteuerten Redundanz. In diesem Beispiel ersetzen sich die beiden Steuerventile also wechselseitig, um die Redundanz zu erzeugen.

Ein ähnliches System ist in DE 10 2016 005 318 A1 offenbart. Das dort offenbarte Bremssystem weist wiederum mindestens zwei Bremskreise auf, wobei mindestens einem der mindestens zwei Bremskreise ein elektrisch und pneumatisch steuerbares Steuerventil und einem weiteren der mindestens zwei Bremskreise ein elektrisch steuerbares Parkbremsventil zugeordnet ist, zum Vorgeben von Bremsdrücken zur Ansteuerung von Radbremsen des jeweiligen Bremskreises. Eine erste Steuereinheit ist vorgesehen, die ausgebildet ist, das jeweilige Steuerventil in Abhängigkeit einer automatisiert angeforderten Fahrzeugsollverzögerung oder einer vom Fahrer vorgegebenen Betätigung über eine Betätigungsvorrichtung elektrisch anzusteuern. Eine zweite Steuereinheit ist vorgesehen, die dazu ausgebildet ist, das Parkbremsventil in Abhängigkeit der automatisiert angeforderten Fahrzeugsollverzögerung elektrisch zu steuern, wenn eine elektrische Ansteuerung des jeweiligen Steuerventils verhindert ist, zum Ausbilden einer elektronisch pneumatisch gesteuerten Redundanz. Weiterhin ist mindestens ein einem Steuerventil zugeordnetes Bypass-Ventil vorgesehen, das ausgebildet ist, das zugeordnete Steuerventil pneumatisch anzusteuern, wenn die pneumatische Ansteuerung in Abhängigkeit der automatisiert angeforderten Fahrzeugsollverzögerung oder in Abhängigkeit der von dem Fahrer vorgegebenen Betätigung der Betätigungsvorrichtung erfolgt, wenn eine elektrische Ansteuerung des jeweiligen Steuerventils verhindert ist, zum Erweitern der elektronisch pneumatisch gesteuerten Redundanz.

Die DE102014006615A1 offenbart ein druckmittelbetriebenes Bremssystem für ein Kraftfahrzeug, insbesondere Nutzfahrzeug, mit einer Betriebsbremseinrichtung und einer Feststellbremseinrichtung. Dabei weist die Feststellbremseinrichtung ein Feststellbremsmodul und eine mit dem Feststellbremsmodul gekoppelte elektrische Betätigungseinrichtung auf. Die Betriebsbremseinrichtung weist einen Bremswertgeber zum Erzeugen mindestens eines elektrischen Bremsanforderungssignals auf. Erfindungsgemäß ist der Bremswertgeber mittels mindestens einer Datenleitung mit dem Feststellbremsmodul zum Herstellen einer Datenverbindung mittelbar oder unmittelbar verbunden, wobei über diese Datenleitung das Bremsanforderungssignal übertragbar ist.

Ein Problem hierbei ist, dass alle diese Systeme primär auf eine Restverfügbarkeit bei Einfachfehlern abzielen, um das Fahrzeug in einen sicheren Zustand zu überführen. Sie eignen sich im Allgemeinen nicht, um das Fahrzeug bis zu seinem Ziel weiterfahren zu lassen.

Aufgabe der vorliegenden Erfindung ist es, daher, mit möglichst geringem Aufwand, eine weitere Redundanzebene zu schaffen, die es ermöglicht, bei einem Doppelfehler mindestens die Restbremswirkung zur Verfügung stellen zu können. Als Doppelfehler werden insbesondere Defekte verstanden, die sowohl beispielsweise im zentralen Modul als auch im Feststellbremsmodul vorliegen. Das heißt, Doppelfehler sind solche Fehler, die zum Ausfall der Betriebsebene und der ersten elektrischen Redundanzebene, die über den Feststellbremskreis abgebildet wird, führen.

Die Erfindung löst die Aufgabe bei einem elektronisch steuerbaren Bremssystem der eingangs genannten Art dadurch, dass der Vorderachsmodulator dazu ausgebildet ist, für den Fall eines weiteren Defekts in dem Feststellbremsmodul die Bremsvorgabe zu verarbeiten und wenigstens in Abhängigkeit der Bremsvorgabe einen Vorderachs-Redundanz-Bremsdruck an den Vorderachsbremsen auszusteuern zum redundanten Umsetzen der Bremsvorgabe.

Der Erfindung liegt die Erkenntnis zugrunde, dass die Restverfügbarkeit und insbesondere eine verbesserte Restbremswirkung dadurch erreicht werden kann, dass eine zweite Redundanzebene gebildet wird, die für den Fall eines Ausfalls der ersten Redundanzebene die Steuerung des Bremssystems übernimmt, und dass diese zweite Redundanzebene über den Vorderachsmodulator umgesetzt wird.

Das heißt, für den Fall, dass sowohl das Betriebsbremssystem ausfällt, weil beispielsweise das Zentralmodul einen Defekt hat und auch die erste Redundanzebene ausfällt, weil beispielsweise das Feststellbremsmodul einen Defekt hat, der Vorderachsmodulator die Steuerung übernimmt. Der erste genannte Defekt kann in diesem Fall ein schwerwiegender Fehler sein, insbesondere ein elektrischer oder elektropneumatischer Fehler. Bei solchen Fehlern kann dann als zweite Rückfallebene, oder auch alternativ zur ersten Rückfallebene oder zusätzlich agierend, der Vorderachsmodulator eingreifen. Das heißt, ein zweites Redundanzsystem ist im Vorderachsmodulator integriert.

Um dies umzusetzen, ist der Vorderachsmodulator vorzugsweise mit einer BUS-Verbindung mit dem zentralen Steuermodul und/oder an dem Feststellbremsmodul verbunden. Die BUS-Verbindung kann eine direkte BUS-Verbindung sein, oder eine Netzwerkkommunikation (CAN-BUS oder Ähnliches). Auch kann die Verbindung nur indirekt über den Fahrzeug-BUS erzeugt werden. Auf diese Weise kann der Vorderachsmodulator Daten und Signale des zentralen Steuermoduls und/oder des Feststellbremsmoduls erhalten, wie beispielsweise Signale, die deren Verfügbarkeit anzeigen.

Darüber hinaus ist der Fahrzeugmodulator vorzugsweise mit dem Fahrzeug-BUS verbunden. Auf diese Weise kann der Vorderachsmodulator mit einer Einheit für autonomes Fahren verbunden sein und von dieser Bremsvorgaben empfangen. Dies ist dann besonders vorteilhaft, wenn das zentrale Steuermodul und das Feststellbremsmodul beide vollständig ausfallen und der Vorderachsmodulator auf diese Weise dann direkt mit der Einheit für autonomes Fahren über den Fahrzeug-BUS kommunizieren kann, um so das Bremssystem zu steuern.

Gemäß einer weiteren bevorzugten Ausführungsform ist vorgesehen, dass die zentrale Steuereinheit, das Feststellbremsmodul und der Vorderachsmodulator von im Wesentlichen separaten ersten, zweiten und dritten Spannungsquellen versorgt werden. Hierdurch kann eine Redundanz sicher ausgeführt werden, und auch bei Ausfall von einer oder zwei Spannungsquellen kann eine Restverfügbarkeit sichergestellt werden.

Gemäß einer weiteren bevorzugten Ausgestaltung weist der VorderachsBremskreis erste und zweite Redundanz-ABS-Ventile auf, oder steuert redundant im Betriebsbremskreis vorhandene ABS-Ventile an zum schlupfgeregelten Aussteuern des Vorderachs-Redundanz-Bremsdrucks, wobei die ersten und zweiten Redundanz-ABS-Ventile zum Empfangen elektrischer Schaltsignale mit dem Feststellbremsmodul verbunden sind. Werden im Betriebsbremskreis vorhandene ABS-Ventile redundant angesteuert, sind vorzugsweise auch diese regulär vorhandenen ABS-Ventile mit dem Feststellbremsmodul verbunden, sodass auch diese von dem Feststellbremsmodul Schaltsignale empfangen können. Auf diese Weise lässt sich, bei einer redundanten Aussteuerung des Vorderachsbremsdrucks über eine elektrische Umsetzung von Bremsanforderungssignalen in dem Feststellbremsmodul, auch eine Schlupfregelung an der Vorderachse umsetzen. Ebenso könnte bei einer rein pneumatisch gesteuerten Redundanz einer Vorderachse und einer elektrischen Aussteuerung der Hinterachse auch eine Schlupfregelung über die Redundanz-ABS-Ventile oder die redundant angesteuerten regulär vorhandenen ABS-Ventile erreicht werden.

Ferner ist vorzugsweise vorgesehen, dass der Hinterachs-Bremskreis dritte und vierte Redundanz-ABS-Ventile aufweist zum schlupfgeregelten Aussteuern des Hinterachs-Redundanz-Bremsdrucks, wobei die dritten und vierten Redundanz-ABS-Ventile zum Empfangen elektrischer Schaltsignale mit dem Feststellbremsmodul verbunden sind. Auf diese Weise kann auch bei der Aussteuerung des Hinterachs-Redundanz-Bremsdrucks eine Schlupfregelung umgesetzt werden. Der Hinterachs-Redundanz-Bremsdrucks wird insbesondere an Federspeicherteilen oder Federspeicherbremsen an der Hinterachse ausgesteuert. Das heißt, in dieser Ausführungsform ist es möglich, eine Bremswirkung an der Hinterachse, die über Federspeicherteile oder Federspeicherbremsen umgesetzt wird, schlupfgeregelt zu realisieren.

In einer weiteren bevorzugten Ausführungsform ist ein Redundanz-ESC Modul vorgesehen, welches mit dem Feststellbremsmodul verbunden oder mit diesem integriert ist. Das Bremssystem gemäß dem vorliegenden Ausführungsbeispiel weist darüber hinaus vorzugsweise ein reguläres ESC-Modul auf, welches beispielsweise mit dem zentralen Steuermodul verbunden oder mit diesem integriert sein kann. Ist das reguläre ESC-Modul mit dem zentralen Steuermodul integriert, kann es vorkommen, dass bei einem Defekt des zentralen Steuermoduls auch das ESC-Modul ausfällt. Wird dann in einer erste Redundanzebene die Steuerung des Bremssystems über das Feststellbremsmodul realisiert, ist bevorzugt, das auch hier eine Stabilitätsregelung erfolgen kann und insofern ein Redundanz-ESC-Modul für das Feststellbremsmodul vorgesehen ist. Die Fahrstabilität kann auf diese Weise auch im Redundanzfall weiter verbessert werden.

In ähnlicher Weise ist vorzugsweise auch ein redundanter Lenkwinkelsensor vorgesehen. Dieser kann beispielsweise so angeschlossen sein, dass er nur für die ersten und zweiten Redundanzebenen verwendet wird.

In einer weiteren bevorzugten Ausführungsform ist vorgesehen, dass der Vorderachsmodulator einen pneumatischen Vorderachsbremsdruckanschluss aufweist, zum Empfangen einer pneumatischen Bremsvorgabe, wobei der Vorderachsmodulator dazu ausgebildet ist, basierend auf der pneumatischen Bremsvorgabe, den Vorderachsbremsdruck pneumatisch auszusteuern. Die pneumatische Bremsvorgabe kann beispielsweise von einem Bremswertgeber, wie insbesondere einem pneumatischen Bremspedal, ausgesteuert werden, oder der Druck einer weiteren oder Zusatzachse sein, der entsprechend an dieser Achse abgegriffen wird. Auf diese Weise lässt der Vorderachsmodulator auch eine pneumatische Redundanz zu, insbesondere für den Fall, dass alle in dem Vorderachsmodulator vorhandene Elektronik ausfällt.

Vorzugsweise weist das Bremssystem einen Bremswertgeber auf, der über eine erste elektrische Bremswertgeberleitung mit dem zentralen Steuermodul und über eine zweite elektrische Bremswertgeberleitung mit dem Feststellbremsmodul verbunden ist. Auf diese Weise erhalten sowohl das zentrale Steuermodul als auch das Feststellbremsmodul direkt von dem Bremswertgeber entsprechende Bremsanforderungssignale, und, unabhängig von der Funktion des einen oder des anderen Moduls, erhalten beide Module weiterhin die Bremsanforderungen. Es ist aber auch denkbar, dass der Bremswertgeber über einen Fahrzeug-BUS zusätzlich oder alternativ mit einem oder beiden von diesen Modulen verbunden ist.

Vorzugsweise verfügt der Bremswertgeber auch über eine pneumatische Bremswertgeberleitung, wobei der Bremswertgeber dann über die pneumatische Bremswertgeberleitung zum Aussteuern der pneumatischen Bremsvorgabe an dem pneumatischen Vorderachsbremsdruckanschluss mit dem Vorderachsmodulator verbunden ist. Auf diese Weise lässt sich der Vorderachsmodulator mittels des Bremspedals steuern.

Weiterhin ist bevorzugt, vorgesehen, dass das Feststellbremsmodul einen ersten Redundanzdruckanschluss aufweist zum Bereitstellen eines ersten Redundanzdrucks an dem pneumatischen Vorderachsbremsdruckanschluss zum Aussteuern des redundanten Vorderachsbremsdrucks durch den Vorderachsmodulator in dem Fall eines Defekts in dem zentralen Steuermodul. Auf diese Weise ist es möglich, in einer rein pneumatischen Redundanz der Vorderachse, diese über das Feststellbremsmodul zu steuern. Der an dem ersten Redundanzdruckanschluss des Feststellbremsmoduls bereitgestellte erste Redundanzdruck kann für diesen Fall von dem Feststellbremsmodul ausgesteuert werden, oder auch der von dem Feststellbremsmodul an der Hinterachse ausgesteuerte Hinterachs-Redundanz-Bremsdruck sein.

Ferner ist bevorzugt, dass das Feststellbremsmodul einen zweiten Redundanzdruckanschluss aufweist, zum Empfangen eines zweiten Redundanzdrucks der dem Vorderachsbremsdruck oder einem davon abgeleiteten Druck entspricht. In dieser Variante ist in das Feststellbremsmodul vorzugsweise auch ein Anhängersteuermodul integriert, das üblicherweise Betriebsbremsdrücke an einen Anhänger übergibt. Durch die Bereitstellung des zweiten Redundanzdrucks wird hier eine weitere Redundanz bereitgestellt. Sollte das Feststellbremsmodul bzw. das damit integrierte Anhängersteuermodul ausfallen, bzw. eine elektronische Steuereinheit des Feststellbremsmoduls bzw. des Anhängersteuermoduls, kann ein von dem Vorderachsmodulator ausgesteuerter Druck, wie beispielsweise der Vorderachsbremsdruck oder ein davon abgeleiteter Druck, als zweiter Redundanzdruck an dem Feststellbremsmodul bzw. Anhängersteuermodul bereitgestellt werden, um so eine pneumatische Redundanz insbesondere auch für einen eventuell angehängten Anhänger bereitzustellen.

In einem zweiten Aspekt wird die eingangs genannte Aufgabe durch ein Fahrzeug gelöst, insbesondere Nutzfahrzeug, mit einem elektronisch steuerbaren Bremssystem nach einer der vorstehenden bevorzugten Ausführungsformen eines elektronisch steuerbaren Bremssystems gemäß dem ersten Aspekt der Erfindung. Es soll verstanden werden, dass das elektronisch steuerbare Bremssystem gemäß dem ersten Aspekt der Erfindung und das Fahrzeug gemäß dem zweiten Aspekt der Erfindung gleiche und ähnliche Unteraspekte aufweisen, wie sie insbesondere in den abhängigen Ansprüchen niedergelegt sind. Insofern wird für die bevorzugte Ausführungsform eines Fahrzeugs vollumfänglich auf die oben beschriebenen bevorzugten Ausführungsformen des elektronisch steuerbaren Bremssystems verwiesen.

In einem dritten Aspekt wird die eingangs genannte Aufgabe gelöst durch ein Verfahren zum Steuern eines elektronisch steuerbaren Bremssystems nach einer der vorstehend beschriebenen bevorzugten Ausführungsformen eines elektronisch steuerbaren Bremssystems gemäß dem ersten Aspekt der Erfindung, wobei das Verfahren wenigstens die folgenden Schritte aufweist: Feststellen, ob die Bremsvorgabe über den Vorderachsbremskreis und/oder den Hinterachsbremskreis elektrisch gesteuert durch das zentrale Steuermodul umgesetzt werden kann; falls ein durch das zentrale Steuermodul elektrisch gesteuertes Umsetzen der Bremsvorgabe über den Vorderachsbremskreis und/oder den Hinterachsbremskreis verhindert ist: Feststellen, ob die Bremsvorgabe über den Vorderachsbremskreis und/oder den Feststellbremskreis elektrisch gesteuert durch das Feststellbremsmodul umgesetzt werden kann; und, falls ein durch das Feststellbremsmodul elektrisch gesteuertes Umsetzen der Bremsvorgabe über den Vorderachsbremskreis und/oder den Feststellbremskreis nicht verhindert ist: Aussteuern des Vorderachs- und Hinterachs-Redundanzbremsdrucks an den Vorderachsbremsen beziehungsweise an den Federspeicherteilen zum von dem Feststellbremsmodul elektrisch gesteuerten Umsetzen der Bremsvorgabe über den Vorderachsbremskreis und den Feststellbremskreis.

Es soll verstanden werden, dass das Bremssystem gemäß dem ersten Aspekt der Erfindung und das Verfahren gemäß dem dritten Aspekt der Erfindung gleiche und ähnliche Unteraspekte haben, wie sie insbesondere in den abhängigen Ansprüchen niedergelegt sind. Insofern wird auch bezüglich des Verfahrens vollumfänglich auf die obige Beschreibung zum ersten Aspekt der Erfindung verwiesen.

In einer bevorzugten Ausführungsform des Verfahrens ist für den Fall, dass ein durch das Feststellbremsmodul elektrisch gesteuertes Umsetzen der Bremsvorgabe über den Vorderachsbremskreis und/oder den Feststellbremskreis verhindert ist, vorgesehen: Feststellen, ob die Bremsvorgabe über den Vorderachsbremskreis und/oder den Feststellbremskreis elektrisch gesteuert durch den Vorderachsmodulator umgesetzt werden kann; und, falls ein durch den Vorderachsmodulator elektrisch gesteuertes Umsetzen der Bremsvorgabe über den Vorderachsbremskreis und/oder den Feststellbremskreis nicht verhindert ist: Aussteuern des Vorderachs- und Hinterachs-Redundanzbremsdrucks an den Vorderachsbremsen bzw. Federspeicherteilen, zum von dem Vorderachsmodulator elektrisch gesteuerten Umsetzen der Bremsvorgabe über den Vorderachsbremskreis und den Feststellbremskreis.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfin-dung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den An-sprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsform sowie anhand der Zeichnung; diese zeigt in:

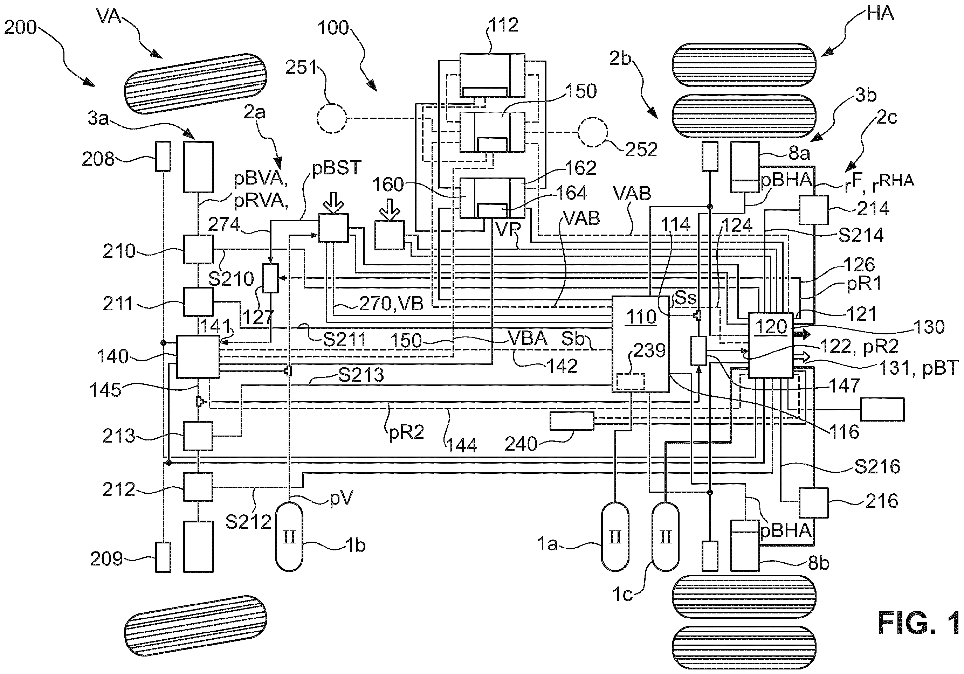

- Fig. 1: ein Ausführungsbeispiel eines elektronisch steuerbaren Bremssystems.

Figur 1 zeigt ein Ausführungsbeispiel eines elektronisch steuerbaren Bremssystems 100 für ein Fahrzeug 200, insbesondere ein Nutzfahrzeug 200. Das Bremssystem 100 weist einen ersten Druckluftvorrat 1a, einen zweiten Druckluftvorrat 1b und einen dritten Druckluftvorrat 1c auf. Die ersten und zweiten Druckluftvorräte 1a, 1b sind einem Betriebsbremssystem 102 zugeordnet. Ein Vorderachsbremskreis 2a wird durch den zweiten Druckluftvorrat 1b gespeist. Ein Hinterachsbremskreis 2b für die Hinterachse HA des Fahrzeugs 200 wird durch den ersten Druckluftvorrat 1a gespeist. Dem Vorderachsbremskreis 2a sind Vorderachsbremsen 3a zugeordnet und dem Hinterachsbremskreis 2b sind Hinterachsbremsen 3b zugeordnet. Der dritte Druckluftvorrat 1c ist einem Feststellbremkreis 2c zugeordnet, der auf Federspeicherbremsen 8a, 8b, bzw. Federspeicherteile 8a, 8b von sogenannten Tristop-Bremszylindern, die kombinierte Betriebsbremsen und Federspeicherbremsen sind, an der Hinterachse HA einwirkt.

Zum Steuern des Bremssystems 100, und insbesondere des Betriebsbremssystems 102, ist ein zentrales Steuermodul 110 vorgesehen. Das zentrale Steuermodul 110 umfasst in dieser Ausführungsform auch einen Hinterachsmodulator (nicht separat gezeigt), der hier mit dem zentralen Steuermodul 110 in ein Modul integriert ist. Das zentrale Steuermodul 110 ist mit dem ersten Druckluftvorrat 1a verbunden und empfängt von diesem Vorratsdruck pV. Das zentrale Steuermodul 110 ist mit einem Fahrzeug-BUS 150 verbunden, und über diesen unter anderem mit einer Einheit für autonomes Fahren 112. Auf diese Weise empfängt das zentrale Steuermodul 110 eine Assistenzbremsvorgabe VAB über den Fahrzeug-BUS 150 von der Einheit für autonomes Fahren 112. Das zentrale Steuermodul 110 verarbeitet dann diese Assistenzbremsvorgabe VAB und steuert über einen ersten Hinterachsbremskanal 114 und einen zweiten Hinterachsbremskanal 116 einen Hinterachs-Betriebsbremsdruck pBHA direkt an den Hinterachsbremsen 3b aus. Insofern agiert das zentrale Steuermodul 110 auch als Hinterachsmodulator.

Darüber hinaus steuert das zentrale Steuermodul 110 ein Betriebsbrems-Steuersignal Sb über eine direkte BUS-Verbindung 142 aus und stellt dieses so einem Vorderachsmodulator 140 bereit. Der Vorderachsmodulator 140 ist mit dem zweiten Druckluftvorrat 1b verbunden und empfängt von diesem Vorratsdruck pV. Der Vorderachsmodulator 140 empfängt das Betriebsbrems-Steuersignal Sb und setzt dieses in einen Vorderachs-Betriebsbremsdruck pBVA um, der dann an Vorderachsbremsen 3a ausgesteuert wird. Zwischen den Vorderachsmodulator 140 und die entsprechenden Vorderachsbremsen 3a sind zunächst reguläre erste und zweite ABS-Ventile 211, 213 geschaltet, die ihrerseits mit der zentralen Steuereinheit 110 verbunden sind, und von dieser Schaltsignale S211, S213 empfangen, um ein Blockieren der Vorderachse VA zu vermeiden. Dazu ist das zentrale Steuermodul 110 auch mit ersten und zweiten Vorderachsraddrehzahlsensoren 208, 209 verbunden.

Ferner sind zwischen dem Vorderachsmodulator 140 und die Vorderachsbremsen 3a erste und zweite Redundanz-ABS-Ventile 210, 212 geschaltet, die weiter unten genauer beschrieben werden.

Im üblichen Betrieb wird also insbesondere von der Einheit für autonomes Fahren 112 die Assistenzbremsvorgabe VAB vorgegeben, die eine Wunschverzögerung des Fahrzeugs 200 angibt, dann von dem zentralen Steuermodul 110 empfangen, von diesem direkt in den Hinterachs-Betriebsbremsdruck pBHA umgesetzt und weiterhin ein Betriebsbrems-Steuersignal Sb ausgesteuert, das dann vom Vorderachsmodulator 140 in den Vorderachs-Betriebsbremsdruck pBVA umgesetzt wird.

In dem Feststellbremskreis 2c ist ein Feststellbremsmodul 120 vorgesehen, das seinerseits mit dem Fahrzeug-BUS 150 verbunden ist und ebenso die Assistenzbremsvorgabe VAB erhalten kann. Darüber hinaus ist das Feststellbremsmodul 120 mit einem Feststellbremsschalter HCU verbunden und empfängt von diesem ein Feststellbremssignal VP. Das Feststellbremsmodul 120 ist zum Empfangen von Vorratsdruck pV mit dem dritten Druckluftvorrat 1c verbunden und steuert im normalen Betrieb einen Federspeicherbremsdruck pF an Federspeicherteilen 8a, 8b der Hinterachse HA aus. Die Federspeicherteile 8a, 8b sind so gestaltet, dass sie im belüfteten Zustand gelöst sind und im entlüfteten Zustand aufgrund einer Federkraft zuspannen. Das Feststellbremsmodul 120 stellt also, damit die Federspeicherteile 8a, 8b gelöst sind, im normalen Fahrbetrieb den Federspeicherbremsdruck pF bereit, um so die Federspeicherteile 8a, 8b zu lösen. Empfängt das Feststellbremsmodul 120 von dem Feststellbremsschalter HCU das Feststellbremssignal VP, entlüftet das Feststellbremsmodul 120 die Federspeicherteile 8a, 8b und bremst so die Hinterachse HA ein.

Neben dem autonomen Fahren mittels der Einheit für autonomes Fahren 120, lässt das Bremssystem 100 auch ein manuelles Steuern und Bremsen zu. Hierzu ist ein Bremswertgeber BST vorgesehen, der hier als sogenannter 2e1p-Bremswertgeber ausgebildet ist und zunächst über eine erste elektrische Bremswertgeberleitung 270 mit dem zentralen Steuermodul 110 verbunden ist und auf diese Weise an dem zentralen Steuermodul 110 eine (manuelle) Bremsvorgabe VB bereitstellen kann. Über eine zweite elektrische Bremswertgeberleitung 272 ist der Bremswertgeber BST mit dem Feststellbremsmodul 120 verbunden und stellt ebenso die Bremsvorgabe VB an diesem bereit. Nun ist es zum einen möglich, dass das zentrale Steuermodul 110 die Bremsvorgabe VB empfängt und in entsprechender Weise ein Betriebsbrems-Steuersignal Sb an dem Vorderachsmodulator 140 bereitstellt, wie das bereits oben grundsätzlich beschrieben wurde. Über den pneumatischen Anschluss an dem Bremswertgeber BST allerdings, ist noch ein pneumatische Bremswunschaussteuerung möglich. So ist der Bremswertgeber BST in dem gezeigten Ausführungsbeispiel über eine pneumatische Bremswertgeberleitung 274 mit dem Vorderachsmodulator 140 verbunden, zum Aussteuern einer pneumatischen Bremsvorgabe pBST an einem pneumatischen Vorderachsbremsdruckanschluss 141 des Vorderachsmodulators 140. Der Vorderachsmodulator 140 empfängt die pneumatische Bremsvorgabe pBST, volumenverstärkt diese mittels des Vorratsdrucks pV, der von dem zweiten Druckluftvorrat 1b bereitgestellt wird, und steuert in entsprechender Weise den Vorderachs-Betriebsbremsdruck pBVA aus. In dieser Variante ist es nicht erforderlich, dass der Vorderachsmodulator 140 eine eigene Steuereinheit aufweist.

In dem in Fig. 1 gezeigten Bremssystem 100 ist nun für den Fall eines Defekts in dem Betriebsbremssystem 120 eine erste Redundanzebene gebildet. In der ersten Redundanzebene ist vorgesehen, dass die Bremsung des Fahrzeugs 200 von dem Feststellbremsmodul 120 übernommen wird. Das Feststellbremsmodul 120 weist dazu eine eigene Steuereinheit auf, die in dem in Fig. 1 gezeigten Feststellbremsmodul 120 integriert ist. Zu diesem Zweck ist zunächst das Feststellbremsmodul 120 über eine BUS-Verbindung 124 oder eine direkte elektrische Verbindung mit dem zentralen Steuermodul 110 verbunden und tauscht mit diesem Statussignale Ss aus. So empfangen beispielsweise sowohl das zentrale Steuermodul 110 als auch das Feststellbremsmodul 120 über den Fahrzeug-BUS 150 die Assistenzbremsvorgabe VAB. Das Feststellbremsmodul 120 und das zentrale Steuermodul 110 kommunizieren dann über die BUS-Verbindung 124, um die empfangene Assistenzbremsvorgabe VAB gegenseitig zu verifizieren. Stellt hierbei beispielsweise das Feststellbremsmodul 120 fest, dass das zentrale Steuermodul 110 nicht mehr richtig oder nicht mehr funktioniert, kann das Feststellbremsmodul 120 die Steuerung des Bremssystems 100 übernehmen. In diesem Fall setzt dann das Feststellbremsmodul 120 die Assistenzbremsvorgabe VAB um und steuert entsprechend einen Hinterachs-Redundanzbremsdruck pRHA an den Federspeicherteil 8a, 8b aus, um diese zum Abbremsen der Hinterachse HA zu verwenden. Der Hinterachs-Redundanzbremsdruck pRHA entspricht somit vorzugsweise in etwa dem invertierten Hinterachs-Betriebsbremsdruck pBHA.

Um hier ein Blockieren der Hinterachse HA verhindern zu können, sind in dem Feststellbremskreis 2c zwischen dem Feststellbremsmodul 120 und den entsprechenden Federspeicherteilen 8a, 8b dritte und vierte Redundanz-ABS-Ventile 214, 216 vorgesehen, die ihrerseits Schaltsignale S214, S216 von dem Feststellbremsmodul 120 empfangen. Auf diese Weise kann auch bei dem Verwenden von Federspeicherteilen 8a, 8b an der Hinterachse HA zum redundanten Abbremsen der Hinterachse HA in der ersten Rückfallebene auf eine schlupfgeregelte Bremsung zurückgegriffen werden.

Um auch die Vorderachse VA in dieser ersten Redundanzebene redundant einbremsen zu können, beispielsweise, weil die elektronische Steuereinheit des Vorderachsmodulators 140 einen Fehler hat, weist das Feststellbremsmodul 120 einen ersten Redundanzdruckanschluss 121 auf, an dem das Feststellbremsmodul einen ersten Redundanzdruck pR1 bereitstellt. Der erste Redundanzdruckanschluss 121 ist über eine erste Redundanzdruckleitung 126 mit dem Vorderachsbremskreis 2a verbunden, genauer gesagt, mit einem ersten Select-High-Ventil 127, das an seinem anderen Eingang mit der pneumatischen Bremswertgeberleitung 274 verbunden ist. Das erste Select-High-Ventil 127 steuert dann den höheren der pneumatischen Bremsvorgabe pBST und des ersten Redundanzdrucks pR1 an dem pneumatischen Vorderachsbremsdruckanschluss 141 aus, sodass der Vorderachsmodulator 140 den dort bereitgestellten Druck pneumatisch umsetzen und volumenverstärkt als VorderachsBetriebsbremsdruck pBVA beziehungsweise im Redundanzfall als redundanten Vorderachsbremsdruck pRVA an den Vorderachsbremsen 3a bereitstellt. In dem Fall, wenn der erste Redundanzdruck pR1 bereitgestellt wird, ist es ebenso wünschenswert, eine Schlupfregelung durchzuführen. Zu diesem Zweck sind die ersten und zweiten Redundanz-ABS-Ventile 210, 212 vorgesehen, die ihre entsprechenden Schaltsignale S210, S212 von dem Feststellbremsmodul 120 erhalten. Das Feststellbremsmodul 120 ist dazu auch mit einer redundanten Verkabelung mit den ersten und zweiten Vorderachsraddrehzahlsensoren 208, 209 verbunden, um so Drehzahlwerte der Vorderachse VA zu erhalten.

In dem gezeigten Ausführungsbeispiel (Fig. 1) sind also an der Vorderachse VA insgesamt vier ABS-Ventile vorgesehen. Es soll verstanden werden, dass auch Ausführungsformen bevorzugt sind, die nur zwei ABS-Ventile in der Vorderachse VA aufweisen. Für diesen Fall können beispielsweise die Redundanz-ABS-Ventile 210, 212 entfallen. Stattdessen aber eine redundante Verkabelung vorgesehen sein, derart, dass die regulär vorgesehenen ABS-Ventile 211, 212 nicht nur mit der zentralen Steuereinheit 110, sondern auch mit dem Feststellbremsmodul 120 verbunden sind, um von diesem die entsprechenden Schaltsignale zu erhalten.

Um nun eine zweite Redundanzebene vorzusehen, die dann zum Einsatz kommen kann, wenn auch in der ersten Redundanzebene ein Defekt vorliegt, oder alternativ zur ersten Redundanzebene vorgesehen sein kann, ist der Vorderachsmodulator 140 mit einer elektronischen Steuereinheit ausgestattet, die ebenfalls in das in Fig. 1 gezeigte Modul integriert ist. Der Vorderachsmodulator 140 ist zu diesem Zweck wiederum mit dem Fahrzeug-BUS 150 verbunden und empfängt über diesen auch die Assistenzbremsvorgabe VAB. Oben wurde bereits beschrieben, dass der Vorderachsmodulator 140 mit der zentralen Steuereinheit 110 verbunden ist. In dem gezeigten Ausführungsbeispiel ist er darüber hinaus auch über eine zweite BUS-Verbindung 144 mit dem Feststellbremsmodul 120 verbunden. Insofern können sich die drei vorgesehenen Module, das zentrale Steuermodul 110, das Feststellbremsmodul 120 und der Vorderachsmodulator 140 gegenseitig verifizieren. Stellt auf diese Weise der Vorderachsmodulator 140 fest, dass beispielsweise das zentrale Steuermodul 110 und/oder das Feststellbremsmodul 120 nicht mehr richtig oder nicht mehr funktionieren, ist in dieser Ausführungsform vorgesehen, dass der Vorderachsmodulator 140 die Steuerung des Bremssystems 100 übernimmt. In diesem Fall steuert der Vorderachsmodulator 140 selbsttätig den VorderachsBetriebsbremsdruck pBVA aus. Er setzt dazu die Assistenzbremsvorgabe VAB um.

Das Feststellbremsmodul 120 ist in der gezeigten Ausführungsform mit einem Anhängersteuermodul 130, auch TCV genannt, intergiert ausgebildet. Der Teil des Feststellbremsmodul 120, der das Anhängersteuermodul 130 bildet, dient im Betriebsbremsfalls dazu, an einem Anhängerbremsdruckanschluss 131 einen Anhängerbremsdruck pBT auszusteuern, um einen Anhänger einzubremsen.

Um in einem Fehlerfall des Anhängersteuermoduls 130 auch den Anhänger redundant einbremsen zu können, zweigt von einer Vorderachsbremsdruckleitung 145 eine zweite Redundanzdruckleitung 146 ab, die zum Feststellbremskreis 2c führt, genauer gesagt zum Anhängersteuermodul 130 des Feststellbremsmoduls 120. Konkret ist in diesem Ausführungsbeispiel aber zunächst ein zweites Select-High-Ventil 147 vorgesehen, dessen anderer Anschluss mit dem ersten Hinterachsbremskanal 114 verbunden ist. So steuert das zweite Select-High-Ventil 147 an einem zweiten Redundanzdruckanschluss 122 des Feststellbremsmoduls 120 jeweils den höheren des zweiten Redundanzdrucks pR2 und des Hinterachs-Betriebsbremsdrucks pBHA aus. Das Feststellbremsmodul 120 bzw. der Teil, der dem Anhängersteuermodul 130 entspricht, ist dann dazu ausgebildet, basierend auf dem empfangen zweiten Redundanzdruck pR2 pneumatisch den Anhängerbremsdruck pBT an dem Anhängerbremsdruckanschluss 131 auszusteuern.

Zur weiteren Ausbildung von Redundanzen ist in dem gezeigten Ausführungsbeispiel neben dem regulären ESC-Modul 239, das hier in das zentrale Steuermodul 110 integriert ist, auch ein Redundanz-ESC-Modul 240 vorgesehen. Das Redundanz-ESC-Modul 240 ist in dem gezeigten Ausführungsbeispiel mit dem Feststellbremsmodul 120 verbunden, um so auch im Redundanzfall, wenn die zentrale Steuereinheit 110 ausfällt, eine Stabilitätsregelung vornehmen zu können.

Ferner ist neben dem regulären Lenkwinkelsensor 151 auch ein redundanter Lenkwinkelsensor 152 vorgesehen. Der reguläre Lenkwinkelsensor 151 ist an einen ersten Knoten des Fahrzeug-BUS 150 angeschlossen, und der redundante Lenkwinkelsensor 252 ist an einen zweiten Knoten des Fahrzeug-BUS 150 angeschlossen. So kann auch für den Fall, dass ein Teil des Fahrzeug-BUS 150 ausfällt, eine Redundanz bereitgestellt werden.

Schließlich weist das Bremssystem 100 drei separate Spannungsquellen 160, 162,164 auf. Die erste Spannungsquelle 160 ist mit der zentralen Steuereinheit 110 verbunden, die zweite Spannungsquelle 162 ist mit dem Feststellbremsmodul 120 verbunden, und die dritte Spannungsquelle 164 ist mit dem Vorderachsmodulator 140 verbunden. Auf diese Weise sind die drei Module unabhängig voneinander mit Spannung versorgt, sodass, wenn eine oder zwei der drei Spannungsquellen 160, 162, 164 ausfällt/ausfallen, dennoch eine Steuerung des gesamten Bremssystems 100 möglich ist.

### Bezugszeichenliste

- 1 a: erster Druckluftvorrat
- 1b: zweiter Druckluftvorrat
- 1c: dritter Druckluftvorrat
- 2a: Vorderachsbremskreis
- 2b: Hinterachsbremskreis
- 2c: Feststellbremskreis
- 3a: Vorderachsbremsen
- 3b: Hinterachsbremsen
- 8a: Federspeicherbremse
- 8b: Federspeicherbremse
- 100: elektronisch steuerbares Bremssystem
- 102: Betriebsbremssystem
- 110: zentrales Steuermodul
- 112: Einheit für autonomes Fahren
- 114: erster Hinterachsbremskanal
- 116: zweiter Hinterachsbremskanal
- 120: Feststellbremsmodul
- 121: erster Redundanzdruckanschluss
- 122: zweiter Redundanzdruckanschluss
- 124: BUS-Verbindung
- 126: erste Redundanzdruckleitung
- 127: erstes Select-High-Ventil
- 130: Anhängersteuermodul
- 131: Anhängerbremsdruckanschluss
- 140: Vorderachsmodulator
- 141: pneumatischer Vorderachsbremsdruckanschluss
- 142: erste BUS-Verbindung
- 144: zweite BUS-Verbindung
- 145: Vorderachsbremsdruckleitung
- 146: zweite Redundanzdruckleitung
- 147: zweites Select-High-Ventil
- 150: Fahrzeug-BUS
- 160: erste Spannungsquelle
- 162: zweite Spannungsquelle
- 163: dritte Spannungsquelle
- 208: erster Vorderachsraddrehzahlsensor
- 209: zweiter Vorderachsraddrehzahlsensor
- 210: erstes Redundanz-ABS-Ventil
- 211: erstes ABS-Ventil
- 212: zweites Redundanz-ABS-Ventil
- 213: zweites ABS-Ventil
- 239: ESC-Modul
- 240: Redundanz-ESC-Modul
- 251: Lenkwinkelsensor
- 252: Redundanter Lenkwinkelsensor
- 270: Erste elektrische Bremswertgeberleitung
- 272: Zweite elektrische Bremswertgeberleitung
- 274: pneumatische Bremswertgeberleitung
- HCU: Feststellbremsschalter
- VA: Vorderachse
- HA: Hinterachse
- pBA: Anhängerbremsdruck
- pBVA: Vorderachs-Betriebsbremsdruck
- pBHA: Hinterachs-Betriebsbremsdruck
- pBST: pneumatische Bremsvorgabe
- pBT: Anhängerbremsdruck
- pRVA: Vorderachs-Redundanzbremsdruck
- pRHA: Hinterachs-Redundanzbremsdruck
- pF: Federspeicherdruck
- pR1: erster Redundanzdruck
- pR2: zweiter Redundanzdruck
- VAB: Assistenz-Bremsvorgabe
- VB: Betriebsbrems-Bremsvorgabe
- VP: Parkbrems-Bremsvorgabe
- Sb: Betriebsbrems-Steuersignal
- Ss: Status-Signal
- S210: Schaltsignal für 210
- S211: Schaltsignal für 211
- S212: Schaltsignal für 212
- S213: Schaltsignal für 213
- S214: Schaltsignal für 214
- S216: Schaltsignal für 216

## Patentansprüche

1. Elektronisch steuerbares Bremssystem (100), insbesondere elektronisch steuerbares pneumatisches Bremssystem (100), für ein Fahrzeug (200), insbesondere Nutzfahrzeug (200), mindestens aufweisend:
ein Betriebsbremssystem (102), mit:
- einem Vorderachsbremskreis (2a) mit einem Vorderachsmodulator (140) und daran angeschlossenen Vorderachsbremsen (3a),
- einem Hinterachsbremskreis (2b) mit Hinterachsbremsen (3b), und
- einem mit einem Fahrzeug-BUS (150) verbundenen zentralen Steuermodul (110),
wobei den Vorderachsbremsen (3a) ein Vorderachs-Betriebsbremsdruck (pBVA) und den Hinterachsbremsen (3b) ein Hinterachs-Betriebsbremsdruck (pBHA) zuführbar ist und das zentrale Steuermodul (110) ausgebildet ist, in Abhängigkeit einer Bremsvorgabe (VAB, VB, VP) ein Betriebsbrems-Steuersignal (Sb) zu erzeugen, wobei der Vorderachs- und Hinterachs-Betriebsbremsdruck (pBVA, pBHA) in Abhängigkeit des Betriebsbrems-Steuersignals (Sb) erzeugt und an die Vorderachs- und Hinterachsbremsen (3a, 3b) vorgegeben werden kann zum von dem zentralen Steuermodul (110) elektrisch gesteuerten Umsetzen der Bremsvorgabe (VAB, VB, VP) über den Vorderachsbremskreis (2a) und den Hinterachsbremskreis (2b); und
ein Feststellbremskreis (2c) mit einem Feststellbremsmodul (120), das dazu ausgebildet ist, für den Fall eines Defekts in dem zentralen Steuermodul, die Bremsvorgabe (VAB, VB, VP) zu verarbeiten und wenigsten in Abhängigkeit der Bremsvorgabe (VAB, VB, VP) einen Hinterachs-Redundanzbremsdruck (pRHA) an Federspeicherteilen auszusteuern zum redundanten Umsetzen der Bremsvorgabe (VAB, VB, VP); wobei
der Vorderachsmodulator (140) mit dem zentralen Steuermodul (110) zum Empfangen des Betriebsbrems-Steuersignals (Sb) und zum Aussteuern des Vorderachs-Betriebsbremsdrucks (pBVA) in Abhängigkeit des Betriebsbrems-Steuersignals (Sb) an den Vorderachsbremsen (3a) verbunden ist,
**dadurch gekennzeichnet, dass** der Vorderachsmodulator (140) dazu ausgebildet ist, für den Fall eines weiteren Defekts in dem Feststellbremsmodul (120), die Bremsvorgabe (VAB, VB, VP) zu verarbeiten und wenigsten in Abhängigkeit der Bremsvorgabe (VAB, VB, VP) einen Vorderachs-Redundanzbremsdruck (pRVA) an den Vorderachsbremsen (3a) auszusteuern zum redundanten Umsetzen der Bremsvorgabe (VAB, VB, VP).

2. Elektronisch steuerbares Bremssystem (100) nach Anspruch 1, wobei der Vorderachsmodulator (140) mit einer BUS-Verbindung (142, 144) mit dem zentralen Steuermodul (110) und/oder dem Feststellbremsmodul (120) verbunden ist.

3. Elektronisch steuerbares Bremssystem (100) nach einem der vorstehenden Ansprüche, wobei der Vorderachsmodulator (140) mit einem Fahrzeug-BUS (150) verbunden ist.

4. Elektronisch steuerbares Bremssystem (100) nach einem der vorstehenden Ansprüche, wobei das zentrale Steuermodul (110), das Feststellbremsmodul (120) und der Vorderachsmodulator (140) von im Wesentlichen separaten ersten, zweiten und dritten Spannungsquellen (160, 162, 164) versorgt werden.

5. Elektronisch steuerbares Bremssystem (100) nach einem der vorstehenden Ansprüche, wobei der Vorderachsbremskreis (2a) erste und zweite Redundanz-ABS-Ventile (210, 212) oder redundant angesteuerte ABS-Ventile (211, 213) aufweist, zum schlupfgeregelten Aussteuern des Vorderachs-Redundanzbremsdrucks (pRVA), wobei die ersten und zweiten Redundanz-ABS-Ventile (210, 212) oder die redundant angesteuerten ABS-Ventile (211, 213) zum Empfangen elektrischer Schaltsignale (S210, S212) mit dem Feststellbremsmodul (120) verbunden sind.

6. Elektronisch steuerbares Bremssystem (100) nach einem der vorstehenden Ansprüche, wobei der Hinterachsbremskreis (2b) dritte und vierte Redundanz-ABS-Ventile (214, 216) aufweist, zum schlupfgeregelten Aussteuern des Hinterachs-Redundanzbremsdrucks (pRHA), wobei die dritten und vierten Redundanz-ABS-Ventile (214, 216) zum Empfangen elektrischer Schaltsignale (S214, S216) mit dem Feststellbremsmodul (120) verbunden sind.

7. Elektronisch steuerbares Bremssystem (100) nach einem der vorstehenden Ansprüche, aufweisend ein Redundanz-ESC Modul (240), welches mit dem Feststellbremsmodul (120) verbunden oder mit diesem integriert ist.

8. Elektronisch steuerbares Bremssystem (100) nach einem der vorstehenden Ansprüche, aufweisend einen redundanten Lenkwinkelsensor (252).

9. Elektronisch steuerbares Bremssystem (100) nach einem der vorstehenden Ansprüche, wobei der Vorderachsmodulator (140) einen pneumatischen Vorderachsbremsdruckanschluss (141) aufweist zum Empfangen einer pneumatischen Bremsvorgabe (pBST), wobei der Vorderachsmodulator (140) dazu ausgebildet ist, basierend auf der pneumatischen Bremsvorgabe (pBST) den Vorderachsbetriebsbremsdruck (pBVA) pneumatisch auszusteuern.

10. Elektronisch steuerbares Bremssystem (100) nach einem der vorstehenden Ansprüche, aufweisend einen Bremswertgeber (BST), der über eine erste elektrische Bremswertgeberleitung (270) mit dem zentralen Steuermodul (110) und über eine zweite elektrische Bremswertgeberleitung (272) mit dem Feststellbremsmodul (120) verbunden ist.

11. Elektronisch steuerbares Bremssystem (100) nach Anspruch 9 und 10, wobei der Bremswertgeber (BST) über eine pneumatische Bremswertgeberleitung (274) mit dem Vorderachsmodulator (140) verbunden ist, zum Aussteuern der pneumatischen Bremsvorgabe (pBST) an dem pneumatischen Vorderachsbremsdruckanschluss (141).

12. Elektronisch steuerbares Bremssystem (100) nach Anspruch 9, wobei das Feststellbremsmodul (120) einen ersten Redundanzdruckanschluss (121) aufweist zum Bereitstellen eines ersten Redundanzdrucks (pR1) an dem pneumatischen Vorderachsbremsdruckanschluss (141) zum Aussteuern des Vorderachs-Redundanzbremsdrucks (pRVA) durch den Vorderachsmodulator (140) in dem Fall eines Defekts in dem zentralen Steuermodul (110).

13. Elektronisch steuerbares Bremssystem (100) nach einem der vorstehenden Ansprüche, wobei das Feststellbremsmodul (120) einen zweiten Redundanzdruckanschluss (122) aufweist, zum Empfangen eines zweiten Redundanzdrucks (pR2) der dem Vorderachsbetriebsbremsdruck (pBVA) oder einem davon abgeleiteten Druck entspricht.

14. Fahrzeug (200), insbesondere Nutzfahrzeug (200), mit einem elektronisch steuerbaren Bremssystem (100) nach einem der vorhergehenden Ansprüche.

15. Verfahren zum Steuern eines elektronisch steuerbaren Bremssystems (100) nach einem der Ansprüche 1 bis 13, mit mindestens den folgenden Schritten:
- Feststellen, ob die Bremsvorgabe (VAB, VB, VP) über den Vorderachsbremskreis (2a) und/oder den Hinterachsbremskreis (2b) elektrisch gesteuert durch das zentrale Steuermodul (110) umgesetzt werden kann;
falls ein durch das zentrale Steuermodul (110) elektrisch gesteuertes Umsetzen der Bremsvorgabe (VAB, VB, VP) über den Vorderachsbremskreis (2a) und/oder den Hinterachsbremskreis (2b) verhindert ist:
- Feststellen, ob die Bremsvorgabe (VAB, VB, VP) über den Vorderachsbremskreis (2a) und/oder den Feststellbremskreis (2c) elektrisch gesteuert durch das Feststellbremsmodul (120) umgesetzt werden kann; und falls ein durch das Feststellbremsmodul (120) elektrisch gesteuertes Umsetzen der Bremsvorgabe (VAB, VB, VP) über den Vorderachsbremskreis (2a) und/oder den Feststellbremskreis (2c) nicht verhindert ist:
- Aussteuern des Vorderachs- und Hinterachs-Redundanzbremsdrucks (pRVA, pRHA) an den Vorderachsbremsen (3a) bzw. Federspeicherteilen (8a, 8b), zum von dem Feststellbremsmodul (120) elektrisch gesteuerten Umsetzen der Bremsvorgabe (VAB, VB) über den Vorderachsbremskreis (2a) und den Feststellbremskreis (2c).

16. Verfahren nach Anspruch 15, wobei falls ein durch das Feststellbremsmodul (120) elektrisch gesteuertes Umsetzen der Bremsvorgabe (VAB, VB, VP) über den Vorderachsbremskreis (2a) und/oder den Feststellbremskreis (2c) verhindert ist:
- Feststellen, ob die Bremsvorgabe (VAB, VB, VP) über den Vorderachsbremskreis (2a) und/oder den Feststellbremskreis (2c) elektrisch gesteuert durch den Vorderachsmodulator (140) umgesetzt werden kann; und falls ein durch den Vorderachsmodulator (140) elektrisch gesteuertes Umsetzen der Bremsvorgabe (VAB, VB, VP) über den Vorderachsbremskreis (2a) und/oder den Feststellbremskreis (2c) nicht verhindert ist:
- Aussteuern des Vorderachs- und Hinterachs-Redundanzbremsdrucks (pRVA, pRHA) an den Vorderachsbremsen (3a) bzw. Federspeicherteilen (8a, 8b), zum von dem Vorderachsmodulator (140) elektrisch gesteuerten Umsetzen der Bremsvorgabe (VAB, VB) über den Vorderachsbremskreis (2a) und den Feststellbremskreis (2c).

## Claims

1. An electronically controllable braking system (100), in particular an electronically controllable pneumatic braking system (100), for a vehicle (200), in particular a commercial vehicle (200), the electronically controllable braking system comprising:
a service brake system (102) including:
- a front axle brake circuit (2a) with a front axle modulator (140) and front axle brakes (3a) connected thereto,
- a rear axle brake circuit (2b) with rear axle brakes (3b), and
- a central control module (110) connected to a vehicle BUS (150),
wherein a front axle service brake pressure (pBVA) can be supplied to the front axle brakes (3a) and a rear axle service brake pressure (pBHA) can be supplied to the rear axle brakes (3b), and the central control module (110) is configured to generate a service brake control signal (Sb) in dependence upon a braking specification ((VAB, VB, VP),
wherein the front axle service brake pressure and rear axle service brake pressure (pBVA, pBHA) can be generated in dependence upon the service brake control signal (Sb) and specified to the front axle brakes and rear axle brakes (3a, 3b), respectively, under the electrical control of the central control module (110) for implementation of the braking specification (VAB, VB, VP) via the front axle brake circuit (2a) and the rear axle brake circuit (2b); and
a parking brake circuit (2c) including a parking brake module (120) configured, in the event of a defect in the central control module, to process the braking specification (VAB, VB, VP) and to output, at least in dependence upon the braking specification (VAB, VB, VP), a rear axle redundancy brake pressure (pRHA) to spring-brake parts for redundant implementation of the braking specification (VAB, VB, VP); wherein
the front axle modulator (140) is connected to the central control module (110) for receiving the service brake control signal (Sb) and outputting the front axle service brake pressure (pBVA) to the front axle brakes (3a) in dependence upon the service brake control signal (Sb),
**characterized in that** the front axle modulator (140) is further configured, in the event of a further defect in the parking brake module (120), to process the braking specification (VAB, VB, VP) and to output, at least in dependence upon the braking specification (VAB, VB, VP), a front axle redundancy brake pressure (pRVA) to the front axle brakes (3a) for the redundant implementation of the braking specification (VAB, VB, VP).

2. The electronically controllable braking system (100) according to claim 1, wherein the front axle modulator (140) is connected by a BUS connection (142, 144) to the central control module (110) and/or the parking brake module (120).

3. The electronically controllable braking system (100) according to any of the foregoing claims, wherein the front axle modulator (140) is connected to a vehicle BUS (150).

4. The electronically controllable braking system (100) according to any of the foregoing claims, wherein the central control unit (110), the parking brake module (120) and the front axle modulator (140) are supplied by substantially separate first, second and third power sources (160, 162, 164), respectively.

5. The electronically controllable braking system (100) according to any of the foregoing claims, wherein the front axle brake circuit (2a) has first and second redundancy ABS (Anti-lock Braking System) valves (210, 212)or redundantly actuated ABS valves (211, 213) for traction-controlled outputting of the front axle redundancy brake pressure (pRVA), wherein the first and second redundancy ABS valves (210, 212) or the redundantly actuated ABS valves (211, 213) are connected to the parking brake module (120) for receiving electrical switching signals (S210, S212).

6. The electronically controllable braking system (100) according to any of the foregoing claims, wherein the rear axle brake circuit (2b) has third and fourth redundancy ABS (Anti-lock Braking System) valves (214, 216) for traction-controlled outputting of the rear axle redundancy brake pressure (pRHA), wherein the third and fourth redundancy ABS valves (214, 216) are connected to the parking brake module (120) for receiving electrical switching signals (S214, 5216).

7. The electronically controllable braking system (100) according to any of the foregoing claims, further comprising a redundancy ESC (Electronic Stability Control) module (240) connected to the parking brake module (120) or integrated therewith.

8. The electronically controllable braking system (100) according to any of the foregoing claims, further comprising a redundant steering angle sensor (252).

9. The electronically controllable braking system (100) according to any of the foregoing claims, wherein the front axle modulator (140) includes a pneumatic front axle brake pressure port (141) for receiving a pneumatic braking specification (pBST), wherein the front axle modulator (140) is configured to pneumatically output the front axle service brake pressure (pBVA) on the basis of the pneumatic braking specification (pBST).

10. The electronically controllable braking system (100) according to any of the foregoing claims, comprising a brake signal transmitter (BST) connected to the central control module (110) via a first electrical brake signal transmitter line (270) and connected to the parking brake module (120) via a second electrical brake signal transmitter line (272).

11. The electronically controllable braking system (100) according to claim 9 and 10, wherein the brake signal transmitter (BST) is connected to the front axle modulator (140) via a pneumatic brake signal transmitter line (274) for the outputting of the pneumatic braking specification (pBST) at the pneumatic front axle brake pressure port (141).

12. The electronically controllable braking system (100) according to claim 9, wherein the parking brake module (120) includes a first redundancy pressure port (121) for providing a first redundancy pressure (pR1) at the pneumatic front axle brake pressure port (141) for the outputting of the redundant front axle brake pressure (pRVA) by the front axle modulator (140) in the event of a defect in the central control module (110) .

13. The electronically controllable braking system (100) according to any of the foregoing claims, wherein the parking brake module (120) includes a second redundancy pressure port (122) for receiving a second redundancy pressure (pR2) corresponding to the front axle service brake pressure (pBVA) or a pressure derived therefrom.

14. A vehicle (200), in particular a commercial vehicle (200), having an electronically controllable braking system (100) according to any of the foregoing claims.

15. A method for controlling the electronically controllable braking system (100) according to any of claims 1 to 13, the method comprising at least the following steps:
- determining whether the braking specification (VAB, VB, VP) can be implemented via the front axle brake circuit (2a) and/or the rear axle brake circuit (2b) under the electrical control of the central control module (110); responsive to determining that implementation of the braking specification (VAB, VB, VP) via the front axle brake circuit (2a) and/or the rear axle brake circuit (2b) under the electrical control of the central control module (110) is prevented:
- determining whether the braking specification (VAB, VB, VP) can be implemented via the front axle brake circuit (2a) and/or the parking brake circuit (2c) under the electrical control of the parking brake module (120); and responsive to determining that implementation of the braking specification (VAB, VB, VP) via the front axle brake circuit (2a) and/or the parking brake circuit (2c) under the electrical control of the parking brake module (120) is not prevented:
- outputting front axle redundancy brake pressure and rear axle redundancy brake pressure (pRVA, pRHA) to the front axle brakes (3a) or spring-brake parts (8a, 8b) for the implementation of the braking specification (VAB, VB, VP) via the front axle brake circuit (2a) and the parking brake circuit (2c) under the electrical control of the parking brake module (120).

16. The method according to claim 15, wherein, responsive to determining that implementation of the braking specification (VAB, VB, VP) via the front axle brake circuit (2a) and/or the parking brake circuit (2c) under the electrical control of the parking brake module (120) is prevented:
- determining whether the braking specification (VAB, VB, VP) can be implemented via the front axle brake circuit (2a) and/or the parking brake circuit (2c) under the electrical control of the front axle modulator (140); and responsive to determining that implementation of the braking specification (VAB, VB, VP) via the front axle brake circuit (2a) and/or the parking brake circuit (2c) under the electrical control of the front axle modulator (140) is not prevented:
- outputting the front axle redundancy brake pressure and the rear axle redundancy brake pressure (pRVA, pRHA) at the front axle brakes (3a) or spring-brake parts (8a, 8b) for the implementation of the braking specification (VAB, VB) via the front axle brake circuit (2a) and the parking brake circuit (2c) under the electrical control of the front axle modulator (140) .

## Revendications

1. Système de freinage à commande électronique (100), en particulier système de freinage pneumatique à commande électronique (100), pour un véhicule, en particulier un véhicule utilitaire (200), qui présente au moins :
un système de freinage de service (102), avec :
- un circuit de freinage d'essieu avant (2a) avec un modulateur d'essieu avant (140) et des freins d'essieu avant (3a) qui y sont raccordés,
- un circuit de freinage d'essieu arrière (2b) avec des freins d'essieu arrière (3b), et
- un module de commande (110) central relié à un véhicule-BUS (150),
dans lequel une pression de freinage de service d'essieu avant (pBVA) peut être amenée aux freins d'essieu avant (3a) et une pression de freinage de service d'essieu arrière (pBHA) peut être amenée aux freins d'essieu arrière (3b), et le module de commande (110) central est conçu pour produire un signal de commande de frein de service (Sb) en fonction d'un objectif de freinage (VAB, VB, VP), dans lequel la pression de freinage de service d'essieu avant et d'essieu arrière (pBVA, pBHA) peut être produite en fonction du signal de commande de frein de service (Sb) et fournie par avance aux freins d'essieu avant et d'essieu arrière (3a, 3b) pour la mise en œ uvre commandée électriquement par le module de commande (110) de l'objectif de freinage (VAB, VB, VP) via le circuit de freinage d'essieu avant (2a) et le circuit de freinage d'essieu arrière (2b) ; et
un circuit de freinage de stationnement (2c) avec un module de freinage de stationnement (120) qui est conçu pour, dans le cas d'une panne dans le module de commande central, traiter l'objectif de freinage (VAB, VB, VP) et, au moins en fonction de l'objectif de freinage (VAB, VB, VP), afin de piloter une pression de freinage de redondance d'essieu arrière (pRHA) au niveau de pièces d'accumulateur élastique pour une mise en œuvre redondante de l'objectif de freinage (VAB, VB, VP) ; dans lequel
le modulateur d'essieu avant (140) avec le module de commande (110) central est relié aux freins d'essieu avant (3a) pour la réception du signal de commande de frein de service (Sb) et pour le pilotage de la pression de freinage de service d'essieu avant (pBVA) en fonction du signal de commande de frein de service (Sb),
**caractérisé en ce que** le modulateur d'essieu avant (140) est conçu pour, dans le cas d'une autre panne dans le module de freinage de stationnement (120), traiter l'objectif de freinage (VAB, VB, VP) et, au moins en fonction de l'objectif de freinage (VAB, VB, VP), afin de piloter une pression de freinage de redondance d'essieu avant (pRVA) au niveau des freins d'essieu avant (3a) pour une mise en œuvre redondante de l'objectif de freinage (VAB, VB, VP).

2. Système de freinage à commande électronique (100) selon la revendication 1, dans lequel le modulateur d'essieu avant (140) est relié avec une liaison BUS (142, 144) au module de commande (110) et/ou au module de freinage de stationnement (120).

3. Système de freinage à commande électronique (100) selon l'une des revendications précédentes, dans lequel le modulateur d'essieu avant (140) est relié avec un véhicule-BUS (150).

4. Système de freinage à commande électronique (100) selon l'une des revendications précédentes, dans lequel l'unité de commande (110), le module de freinage de stationnement (120) et le modulateur d'essieu avant (140) sont alimentés par des première, deuxième et troisième sources de tension (160, 162, 164) essentiellement séparées.

5. Système de freinage à commande électronique (100) selon l'une des revendications précédentes, dans lequel le circuit de freinage d'essieu avant (2a) présente des première et deuxième valves ABS de redondance (210, 212) ou valves ABS commandées de façon redondante (211, 213) pour le pilotage à régulation antipatinage de la pression de freinage de redondance d'essieu avant (pRVA), dans lequel les première et deuxième valves ABS de redondance (210, 212) ou les valves ABS commandées de façon redondante (211, 213) sont reliées au module de freinage de stationnement (120) pour la réception de signaux de commutation (S210, S212) électriques.

6. Système de freinage à commande électronique (100) selon l'une des revendications précédentes, dans lequel le circuit de freinage d'essieu arrière (2b) présente des troisième et quatrième valves ABS de redondance (214, 216) pour le pilotage à régulation antipatinage de la pression de freinage de redondance d'essieu arrière (pRHA), dans lequel les troisième et quatrième valves ABS de redondance (214, 216) sont reliées au module de freinage de stationnement (120) pour la réception de signaux de commutation (S214, S216) électriques.

7. Système de freinage à commande électronique (100) selon l'une des revendications précédentes, qui présente un module ESC de redondance (240), lequel est relié au module de freinage de stationnement (120) ou intégré avec celui-ci.

8. Système de freinage à commande électronique (100) selon l'une des revendications précédentes, qui présente un capteur d'angle de braquage (252) redondant.

9. Système de freinage à commande électronique (100) selon l'une des revendications précédentes, dans lequel le modulateur d'essieu avant (140) présente un raccord de pression de freinage d'essieu avant (141) pour la réception d'un objectif de freinage pneumatique (pBST), dans lequel le modulateur d'essieu avant (140) est conçu pour, sur la base de l'objectif de freinage pneumatique (pBST), piloter de façon pneumatique la pression de freinage de service d'essieu avant (pBVA).

10. Système de freinage à commande électronique (100) selon l'une des revendications précédentes, qui présente un émetteur de valeur de freinage (BST) qui est relié au module de commande (110) central via une première conduite d'émetteur de valeur de freinage électrique (270) et au module de freinage de stationnement (120) via une seconde conduite d'émetteur de valeur de freinage électrique (272).

11. Système de freinage à commande électronique (100) selon la revendication 9 et 10, dans lequel l'émetteur de valeur de freinage (BST) est relié au modulateur d'essieu avant (140) via une conduite d'émetteur de valeur de freinage pneumatique (274) pour le pilotage de l'objectif de freinage pneumatique (pBST) au niveau du raccord de pression de freinage d'essieu avant (141).

12. Système de freinage à commande électronique (100) selon la revendication 9, dans lequel le module de freinage de stationnement (120) présente un premier raccord de pression de redondance (121) pour la fourniture d'une première pression de redondance (pR1) au raccord de pression de freinage d'essieu avant (141) pour le pilotage de la pression de freinage d'essieu avant (pRVA) redondante par le modulateur d'essieu avant (140) dans le cas d'une panne dans le module de commande (110) central.

13. Système de freinage à commande électronique (100) selon l'une des revendications précédentes, dans lequel le module de freinage de stationnement (120) présente un second raccord de pression de redondance (122) pour la réception d'une seconde pression de redondance (pR2) qui correspond à la pression de freinage de service d'essieu avant (pBVA) ou à une pression qui en est dérivée.

14. Véhicule (200), en particulier véhicule utilitaire (200), avec un système de freinage à commande électronique (100) selon l'une des revendications précédentes.

15. Procédé de commande d'un système de freinage à commande électronique (100) selon l'une des revendications 1 à 13, avec au moins les étapes suivantes consistant à :
- établir si l'objectif de freinage (VAB, VB, VP) peut être mis en œuvre par le module de commande (110) central en étant commandé électriquement via le circuit de freinage d'essieu avant (2a) et/ou le circuit de freinage d'essieu arrière (2b) ;
dans le cas où une mise en œuvre de l'objectif de freinage (VAB, VB, VP) commandée électriquement par le module de commande (110) central via le circuit de freinage d'essieu avant (2a) et/ou le circuit de freinage d'essieu arrière (2b) est empêchée :
- établir si l'objectif de freinage (VAB, VB, VP) peut être mis en œuvre par le module de freinage de stationnement (120) en étant commandé électriquement via le circuit de freinage d'essieu avant (2a) et/ou le circuit de freinage de stationnement (2c) ; et dans le cas où une mise en œuvre de l'objectif de freinage (VAB, VB, VP) commandée électriquement par le module de freinage de stationnement (120) via le circuit de freinage d'essieu avant (2a) et/ou le circuit de freinage de stationnement (2c) n'est pas empêchée :
- piloter la pression de freinage de redondance d'essieu avant et d'essieu arrière (pRVA, pRHA) au niveau des freins d'essieu avant (3a) ou des pièces d'accumulateur élastique (8a, 8b) pour la mise en œuvre de l'objectif de freinage (VAB, VB) commandée électriquement par le module de freinage de stationnement (120) via le circuit de freinage d'essieu avant (2a) et le circuit de freinage de stationnement (2c).

16. Procédé selon la revendication 15, dans lequel dans le cas où une mise en œuvre de l'objectif de freinage (VAB, VB, VP) commandée électriquement par le module de freinage de stationnement (120) via le circuit de freinage d'essieu avant (2a) et/ou le circuit de freinage de stationnement (2c) est empêchée :
- établir si l'objectif de freinage (VAB, VB, VP) peut être mis en œuvre par le modulateur d'essieu avant (140) en étant commandé électriquement via le circuit de freinage d'essieu avant (2a) et/ou le circuit de freinage de stationnement (2c) ; et dans le cas où une mise en œuvre de l'objectif de freinage (VAB, VB, VP) commandée électriquement par le modulateur d'essieu avant (140) via le circuit de freinage d'essieu avant (2a) et/ou le circuit de freinage de stationnement (2c) n'est pas empêchée :
- piloter la pression de freinage de redondance d'essieu avant et d'essieu arrière (pRVA, pRHA) au niveau des freins d'essieu avant (3a) ou des pièces d'accumulateur élastique (8a, 8b) pour la mise en œuvre de l'objectif de freinage (VAB, VB) commandée électriquement par le modulateur d'essieu avant (140) via le circuit de freinage d'essieu avant (2a) et le circuit de freinage de stationnement (2c).
